(19) Europäisches Patentamt

European Patent Office

Office européen des brevets

(11) **EP 0 574 306 B1**

(12) **FASCICULE DE BREVET EUROPEEN**

(45) Date de publication et mention de la délivrance du brevet:
**27.08.1997 Bulletin 1997/35**

(51) Int. Cl.$^6$: **B01J 2/30**, C05G 3/00

(21) Numéro de dépôt: **93401462.2**

(22) Date de dépôt: **09.06.1993**

(54) **Utilisation de compositions hydrophobantes pour le traitement d'engrais stockés en vrac**

Verwendung von hydrophoben Zusammensetzungen zur Behandlung von Düngemittel, die als Schüttgut gelagert werden

Use of a hydrophobic composition for treating fertilisers stored in bulk

(84) Etats contractants désignés:
**AT BE DE DK ES FR GB GR IT NL PT SE**

(30) Priorité: **11.06.1992 FR 9207055**

(43) Date de publication de la demande:
**15.12.1993 Bulletin 1993/50**

(73) Titulaire: **CECA S.A.**
**92800 Puteaux (FR)**

(72) Inventeurs:
• **Navascues, Luc**
**F-75011 Paris (FR)**

• **Fabre, Jean-Claude**
**F-94220 Charenton Le Point (FR)**

(74) Mandataire: **Haicour, Philippe**
**ELF ATOCHEM S.A.,**
**Département Propriété Industrielle.**
**4-8, Cours Michelet,**
**La Défense 10**
**92091 Paris Cédex 42 (FR)**

(56) Documents cités:
**EP-A- 0 389 331** **FR-A- 2 290 248**
**FR-A- 2 350 872**

**Description**

La présente invention a trait à un perfectionnement dans le traitement des engrais granulaires en vue d'assurer un comportement satisfaisant au stockage.

Lors de leur stockage, les engrais sont le siège de modifications physiques qui altèrent l'indépendance des grains dont ils sont constitués. Il y a agglomération des grains entre eux, formation de blocs cristallisés dans le tas et/ou de croûtes superficielles, parfois même prise en masse totale de tout le volume stocké. Ces phénomènes sont dûs à l'humidité, soit l'humidité résiduelle consécutive à la fabrication même de l'engrais, soit celle qui résulte d'une reprise d'eau par le matériau stocké en vrac sous hangars mais exposé à l'air ambiant. Comme ils sont liés à la composition de l'engrais, on y remédie par des traitements de finition par pulvérisation ou enrobage à l'aide de compositions connues de l'homme de l'art sous les noms respectifs d'antimottants ou d'hydrophobants.

On a de longue date utilisé comme antimottants des compositions sous forme de poudre d'enrobage ou de liquides pulvérisables à froid, ou de pâtes fusibles pulvérisables à chaud, comportant comme produits actifs des alkyl-aryl-sulfonates, mais surtout des amines à chaînes grasses (FR 1 208 264 ARMOURS & CO) et leurs dérivés associées à divers ingrédients tels que poudres minérales inertes, huiles, cires, etc ... On a, par la suite, amélioré l'efficacité des amines grasses, par exemple par un choix judicieux de la répartition de leurs chaînes grasses (FR 2 644 780 CECA S.A.) ou par association avec divers composés organiques susceptibles de développer une action synergique, de façon banale avec des acides gras, des tensioactifs ethoxylés, des amides gras, des esters orthophosphoriques (EP 32664, N.S.M.), ou encore les alkyl-arylsulfonates déjà cités (FR 2 460 706, C.F.P.I.). Aucune de ces compositions n'a encore résolu de façon satisfaisante le problème posé par le stockage en vrac, notamment celui de la formation d'importantes croûtes à la surface des tas.

La demanderesse a maintenant trouvé que des compositions associant une amine grasse et un alcool gras, dont le brevet français de l'Union Minérale publié sous le N° FR 2 290 248 et son perfectionement FR-A-2350872 (AGS) avaient révélé qu'elles développaient un effet antimottant, confèrent une hydrophobation inattendue aux engrais auxquels on les applique. Cet enseignement nouveau est maintenant industriellement exploitable pour réduire sensiblement la reprise d'eau des engrais stocké en vrac.

L'invention consiste ainsi en l'utilisation de compositions contenant, outre des cires macro- et microcristallines ou un mélange de cires macro- et microcristallines et un vecteur constitué par une huile minérale à caractère paraffinique ou naphténique, un mélange d'amines ou de polyamines à chaîne grasse et d'alcools à chaîne grasse, en vue de limiter la reprise d'eau des engrais stockés en vrac à l'air libre en atmosphère humide, utilisation consistant lors de la fabrication de l'engrais, à le revêtir de la composition ci-dessus par enrobage par pulvérisation à chaud.

Les compositions hydrophobantes selon l'invention sont des mélanges d'amines ou de polyamines à chaîne grasse et d'alcools à chaîne grasse, dans un vecteur constitué par une huile minérale à caractère paraffinique ou naphténique, et comportant des ingrédients ordinaires de formulation, notamment des cires macro- ou microcristallines ou des mélanges de cires macro- et microcristallines. Ces compositions comportent de 10 à 25 % en poids de composés aminés et de 3 à 25 % en poids d'alcools.

Les amines grasses utiles pour l'invention sont d'une façon générale les amines représentables par la formule R-$NH_2$ où R est un reste alkyle ou alkylène, linéaire ou ramifié, comportant de 10 à 24 atomes de carbone, les amines secondaires R-NH-R, ou les diamines R-NH-$CH_2$-$CH_2$-$CH_2$-$NH_2$, R y ayant la même signification. Sont préférées pour l'invention les amines dont la répartition de chaîne est celle des acides gras de suif hydrogéné ou non, d'acides gras de poisson, d'acides gras de colza, et surtout celles dont la répartition des chaînes est distribuée autour de 17/18 atomes de carbone avec un coefficient de dispersion égal ou supérieur à 2 comme le divulgue le brevet français N° 2 644 780 (CECA S.A.).

Quant aux alcools utiles pour l'invention, ce sont les alcools répondant à la formule générale R-PH, où R est une chaîne alkyle ou alkylène comportant de 10 à 24 atomes de carbone, comme par exemple l'alcool octadécylique (stéarylique), l'alcool arachidique, l'alcool béhénylique.

Les compositions selon l'invention se préparent très simplement par dissolution ou dispersion de leurs différents constituants dans une huile, en procédant à chaud vers 80°C et sous agitation jusqu'à l'obtention d'un mélange homogène. Elles se présentent à froid généralement sous l'aspect de solides pâteux. On les applique par pulvérisation à chaud, vers 80°C sur l'engrais à traiter qui a été préalablement chargé à température ambiante dans un tambour enrobeur rotatif. La pulvérisation du produit fondu est effectuée préférentiellement par un système de pulvérisation à l'air. Le temps de séjour de l'engrais dans le tambour enrobeur est prolongé encore une minute environ pour une meilleure homogénéisation de l'enrobage. Les quantités déposées peuvent être comprises entre 0,5 Kg/t et 5 Kg/t d'engrais. Ce sont là des conditions tout-à-fait classiques, bien connues de l'homme de l'art.

Il n'est véritablement de façon d'estimer le comportement d'un engrais que de l'observer dans les conditions réelles de son stockage et de sa manutention, notamment durée, volume et ambiance. Il existe toutefois des tests accélérés qui permettent d'estimer quelle sera la tendance de l'engrais et de porter un jugement sur la valeur du traitement appliqué.

L'essai de la résistance à la prise en masse est rappelé a-après ; il fournit un classement qui est assez fidèlement en corrélation avec celui des essais de type industriel. Il consiste à conditionner les granulés d'engrais par exposition plus ou moins prolongée à une atmosphère d'humidité relative supérieure à l'humidité relative critique de l'engrais pendant des durées variables, puis à en former des éprouvettes cylindriques par compression statique et à en mesurer la cohésion pour une densité apparente donnée.

### a) Conditionnement

Le conditionnement de l'engrais est effectué dans les conditions suivantes:

- température:          20°C
- humidité relative:    75 %
- durée:                0 à 1 heure

### b) Confection des éprouvettes

Les éprouvettes sont confectionnées avec 140 g d'engrais, dans des moules dont le diamètre intérieur est de 5 cm. Les conditions de leur fabrication sont les suivantes:

| Type d'engrais | Pression de moulage (bars) | Durée de compression (heures) |
|---|---|---|
| Ammonitrate | 10 | 16 |
| NPK | 5 | 16 |

### c) Mesures

On définit un indice de mottage (IM) par la relation:

$$IM = dR/dd \text{, où}$$

- d est la densité apparente de l'éprouvette;
- R est sa résistance à la rupture.

La densité apparente (d) est déterminée à partir de la mesure de la hauteur de l'éprouvette cylindrique dont le diamètre constant est connu.

La cohésion (R) est prise comme la résistance à la rupture en traction, obtenue elle-même à partir de la mesure de la résistance à la compression diamétrale, d'après la relation: $R = 2.F/p.(f.h)$ , où

- F est la force de compression appliquée à la rupture,
- h est la hauteur de l'éprouvette,
- f est le diamètre de l'éprouvette.

Les mesures de résistance à la compression sont effectuées à l'aide d'un dynamomètre, à la vitesse d'avancement de 30 mm/min.

### d) Interprétation des résultats

Le rapport entre l'indice de mottage de l'engrais traité (IM) et l'indice de mottage témoin ($IM_o$) de l'engrais non traité définit l'indice relatif de mottage (IRM):

$$(IRM) = (IM) / (IMo)$$

grâce auquel on peut estimer le niveau de protection apporté par le traitement d'antimottage selon un pourcentage de protection $P_M(\%)$

$$P_M(\%) = 100 \, [1 - (IRM)]$$

En ce qui concerne l'hydrophobation, on a ici appliqué le test d'hydrophobation suivant.

### e) *Exposition à l'humidité ambiante*

Une prise d'essai de 300 g d'engrais est placée dans un bécher que l'on enferme dans une enceinte climatique et pesé pour déterminer la reprise pondérale d'humidité de son contenu. L'opération est répétée toutes les heures pendant sept heures. On mène au moins deux essais de front, l'un sur l'engrais pris en l'état, l'autre sur l'engrais enrobé avec la composition hydrophobante.

### f) *Interprétation des résultats*

Si l'on porte graphiquement la prise de poids de l'engrais en fonction du temps, on constate que le pourcentage de reprise d'eau rapporté à la masse initiale de l'engrais évolue pratiquement suivant une loi linéaire avec la durée de l'exposition. On peut, dès lors, déterminer l'efficacité de la composition hydrophobante grâce à un indice de reprise d'humidité, ou indice d'humidité (IH) défini par la relation:

$$IH = d(H_2O)/dt$$

où $(H_2O)$ est la variation de poids de l'engrais due à sa reprise d'eau pendant l'intervalle de temps dt.

Le rapport entre l'indice d'humidité de l'engrais traité (IH) et l'indice d'humidité témoin $(IH_o)$ de l'engrais non traité définit l'indice d'humidité relatif (IRH):

$$(IRH) = (IH)/(IH_o)$$

grâce auquel on peut estimer déterminer le niveau de protection apporté par le traitement d'hydrophobation selon un pourcentage de protection $P_H(\%)$:

$$P_H(\%) = 100 [1 - (IRH)]$$

On estime qu'un engrais traité aura un comportement satisfaisant au stockage en vrac si son indice d'humidité relatif IRH est inférieur ou tout au plus égal à 0,7 (protection $P_H \geq 30$ %) et si son indice relatif de mottage IRM est inférieur à 0,25 (protection $P_M \geq 75$ %).

## EXEMPLES

Dans les exemples qui suivent, on a comparé différentes formulations, toutes du type huile/cire/principe actif, les unes (formules 1 et 2) sont des formulations classiques qui ne comprennent, à titre de principe actif, que des amines grasses, les autres, selon l'invention (formules 3, 4 et 5) exploitent la synergie amine alcool. L'huile utilisée est une huile paraffinique commercialisée par MOBIL sous l'appellation PROREX RPO. La cire est une cire brute microcristalline commercialisée par TOTAL sous le nom de CIRE H5. On a pris comme stéarylamine le NORAM SH de CECA S.A. et comme alcool stéarylique le NACOL 18-94 de CONDEA. Certaines compositions (formules 2, 4 et 5) conformément à l'enseignement du brevet français n° 89 03727 (FR 2 644 780) contiennent en outre une certaine quantité d'amine $C_{12}/C_{14}$ (NORAM C de CECA S.A.) et d'amine $C_{20}/C_{22}$ (NORAM 42 de CECA S.A.). Ces compositions sont les suivantes :

| FORMULE | N° 1 | N° 2 | N° 3 | N° 4 | N°5 |
|---|---|---|---|---|---|
| Huile | 73,0 | 73,0 | 67,0 | 64,0 | 67,0 |
| Amine $C_{18}$ | 17,0 | 11,3 | 17,0 | 11,3 | 11,3 |
| Amine $C_{12}/C_{14}$ | - | 2,85 | - | 2,85 | 2,85 |
| Amine $C_{20}/C_{22}$ | - | 2,85 | - | 2,85 | 2,85 |
| Alcool $C_{18}$ | - | - | 6,0 | 9,0 | 6,0 |
| Cire | 10,0 | 10,0 | 10,0 | 10,0 | 10,0 |

*Exemple ❶*

Un ammonitrate prillé-grossi à 33,5 % d'azote en provenance de l'usine de Grand-Quevilly/Grande Paroisse, témoin ou enrobé en laboratoire avec la composition 1 (selon l'art antérieur) ou la composition 3 (selon l'invention) à raison de 1,2 Kg/t, est soumis à l'essai d'hydrophobation dans les conditions suivantes : 300 grammes d'engrais sont exposés pendant 7 heures à une atmosphère à 75 % d'humidité relative à la température de 25°C, sur un plateau. On a mesuré la reprise d'eau à l'issue de l'exposition et calculé le pourcentage de protection ($P_H$) relativement à la reprise d'eau. Indépendamment, on a effectué un contrôle du pouvoir antimottant de l'agent de traitement comme indiqué plus haut. Les résultats sont les suivants :

| FORMULE | TEMOIN | N° 1 | N° 3 |
|---------|--------|------|------|
| $H_2O$ % | 0,842 | 0,767 | 0,512 |
| $P_H$ % | - | 9 | 39 |
| IR | 10,4 | 2,1 | 2,2 |
| $P_M$ % | - | 80 | 79 |

Ces résultats montrent le fort pouvoir hydrophobant de la formule utilisée conformément à l'invention, laquelle se comporte par ailleurs comme un excellent antimottant. On note en outre que l'engrais témoin se présente à la fin de l'essai sous forme d'un bloc plus ou moins mouillé, que l'engrais traité avec l'antimottant n° 1 aminé classique ne s'est pas pris en bloc, mais que sa surface s'est prise en une croûte friable et déliquescente, tandis que l'engrais traité selon l'invention avec la composition n° 3 reste constitué de grains apparemment inaltérés et libres entre eux aussi bien dans la masse qu'en surface. Ces résultats témoignent sans ambiguïté de l'efficacité du traitement selon l'invention pour la conservation des qualités physiques de l'engrais dans des conditions qui rappellent le stockage en vrac.

*Exemple ❷*

L'essai 1 est reproduit avec les formules 2, 4 et 5 qui mettent en oeuvre des amines avec des chaînes grasses à répartition étalées, la formulation 2 étant une formulation selon l'art antérieur, les formulations 4 et 5 exploitant l'enseignement de la présente invention. On a obtenu :

| FORMULE | TEMOIN | N° 2 | N° 4 | N° 5 |
|---------|--------|------|------|------|
| $H_2O$ % | 0,842 | 0,831 | 0,547 | 0,547 |
| $P_H$ % | - | 1 | 35 | 35 |
| IM | 10,7 | 1,0 | 1,1 | 1,1 |
| $P_M$ % | - | 91 | 90 | 90 |

Ces résultats témoignent ici encore de la synergie inattendue de l'association stéarylamine/alcool gras quant à la limitation de la reprise d'eau de l'engrais en atmosphère humide.

## Revendications

1. Utilisation de compositions contenant, outre des cires macro- et microcristallines ou un mélange de cires macro- et microcristallines et un vecteur constitué par une huile minérale à caractère paraffinique ou naphténique, un mélange d'amines ou de polyamines à chaîne grasse et d'alcools à chaîne grasse, en vue de limiter la reprise d'eau des engrais stockés en vrac à l'air libre en atmosphère humide et la formation d'importantes croûtes à leur surface, utilisation consistant lors de la fabrication de l'engrais, à le revêtir de la composition ci-dessus par enrobage par pulvérisation à chaud

2. Utilisation de compositions selon la revendication 1, caractérisée en ce que les amines ou polyamines à chaîne grasse sont prises dans le groupe constitué par des monoamines primaires R-NH$_2$, des monoamines secondaires R-NH-R et des diamines R-NH-CH$_2$-CH$_2$-CH$_2$-NH$_2$, où R est un reste alkyle ou alkylène comportant de 10 à 24 atomes de carbone, prises seules ou en mélange.

3. Utilisation de compositions selon la revendication 1, caractérisée en ce que les amines grasses sont des alkylamines grasses à 10 à 24 atomes de carbone dont la répartition des chaînes est distribuée autour de 17/18 atomes de carbone avec un coefficient de dispersion égal ou supérieur à 2.

4. Utilisation de compositions selon la revendication 1, caractérisée en ce que l'alcool à chaîne grasse est pris dans le groupe constitué par l'alcool laurique, l'alcool stéarylique, l'alcool arachidique, l'alcool béhénylique, pris seuls ou en mélange.

5. Utilisation de compositions selon la revendication 1, caractérisée en ce que la composition d'enrobage comporte de 10 à 25 % en poids d'amines ou de polyamines à chaîne grasse et de 3 à 25 % en poids d'alcools gras.

6. Utilisation de compositions selon l'une ou l'autre des revendications 1 à 5, caractérisée en ce que la composition d'enrobage est appliquée à des doses comprises entre 0,5 et 5 Kg par tonne d'engrais traité.

## Claims

1. Use of compositions containing, in addition to macro- and microcrystalline waxes or a mixture of macro- and microcrystalline waxes and a vehicle composed of an inorganic oil of paraffinic or naphthenic nature, a mixture of amines or of polyamines with a fatty chain and of alcohols with a fatty chain, for the purpose of limiting the uptake of water by fertilizers stored in bulk in the open air in a wet atmosphere and the formation of significant encrustation at their surface, which use consists, during the manufacture of the fertilizer, in coating it with the above composition by coating by hot spraying.

2. Use of compositions according to Claim 1, characterized in that the amines or polyamines with a fatty chain are taken from the group consisting of primary monoamines R-NH$_2$, secondary monoamines R-NH-R and diamines R-NH-CH$_2$-CH$_2$-CH$_2$-NH$_2$, where R is an alkyl or alkylene residue containing from 10 to 24 carbon atoms, which amines are taken alone or as a mixture.

3. Use of compositions according to Claim 1, characterized in that the fatty amines are fatty alkylamines with 10 to 24 carbon atoms, the allocation of the chains of which is distributed around 17/18 carbon atoms with a dispersion coefficient equal to or greater than 2.

4. Use of compositions according to Claim 1, characterized in that the alcohol with a fatty chain is taken from the group consisting of lauryl alcohol, stearyl alcohol, arachidyl alcohol and behenyl alcohol, taken alone or as a mixture.

5. Use of compositions according to Claim 1, characterized in that the coating composition contains from 10 to 25% by weight of amines or of polyamines with a fatty chain and from 3 to 25% by weight of fatty alcohols.

6. Use of compositions according to one or other of Claims 1 to 5, characterized in that the coating composition is applied at doses of between 0.5 and 5 kg per tonne of fertilizer treated.

## Patentansprüche

1. Verwendung von Zusammensetzungen, enthaltend - neben makro- und mikrokristallinen Wachsen oder einer Mischung von makro- und mikrokristallinen Wachsen und einem aus einem Mineralöl mit paraffinischem oder naphthenischem Charakter bestehenden Träger - eine Mischung von Aminen oder Polyaminen mit Fettkette und Alkoholen mit Fettkette, um die Wasseraufnahme von Düngemitteln, die als loses Schüttgut in freier Luft unter feuchter Atmosphäre gelagert werden, und eine beträchtliche Krustenbildung an ihrer Oberfläche zu begrenzen, wobei die Verwendung bei der Herstellung des Düngemittels darin besteht, daß man das Düngemittel mit der zuvor genannten Zusammensetzung durch Umhüllen mittels Zerstäuben im heißen Zustand überzieht.

2. Verwendung von Zusammensetzungen nach Anspruch 1, dadurch gekennzeichnet, daß die Amine oder Polyamine mit Fettkette ausgewählt sind aus der Gruppe von primären Monoaminen R-NH$_2$, sekundären Monoaminen R-NH-R und Diaminen R-NH-CH$_2$-CH$_2$-CH$_2$-NH$_2$, wobei R ein Alkyl- oder Alkylenrest mit 10 bis 24 Kohlenstoffatomen ist, entweder allein oder in Mischung.

3. Verwendung von Zusammensetzungen nach Anspruch 1, dadurch gekennzeichnet, daß die Fettamine Fettalkylamine mit 10 bis 24 Kohlenstoffatomen sind, deren Kettenverteilung um 17/18 Kohlenstoffatome mit einem Dispersionskoeffizienten von gleich oder größer 2 verteilt ist.

4. Verwendung von Zusammensetzungen nach Anspruch 1, dadurch gekennzeichnet, daß der Alkohol mit Fettkette ausgewählt ist aus der Gruppe von Laurylalkohol, Stearylalkohol, Arachinalkohol und Behenylalkohol, entweder allein oder in Mischung.

5. Verwendung von Zusammensetzungen nach Anspruch 1, dadurch gekennzeichnet, daß die Zusammensetzung zum Umhüllen 10 bis 25 Gew.-% Amine oder Polyamine mit Fettkette und 3 bis 25 Gew.-% Fettalkohole enthält.

6. Verwendung von Zusammensetzungen nach einem der Ansprüche 1 bis 5, dadurch gekennzeichnet, daß die Zusammensetzung zur Umhüllung in Mengen zwischen 0,5 und 5 kg pro Tonne des behandelten Düngemittels angewandt wird.